# EUROPÄISCHE PATENTSCHRIFT

(11) **EP 1 561 553 B1**
(45) Veröffentlichungstag und Bekanntmachung des Hinweises auf die Patenterteilung: **28.03.2007**
(21) Anmeldenummer: 04106217.5
(22) Anmeldetag: 01.12.2004
(51) Int. Cl.: B27C 5/06

(54) **Stützvorrichtung für Vorschubapparate**
Support device for a feeding apparatus
Support pour dispositif d'avance

(30) Priorität: 29.01.2004 DE 202004001290 U
(43) Veröffentlichungstag der Anmeldung: 10.08.2005
(73) Patentinhaber: Aigner, Georg, 94419 Reisbach (DE)
(72) Erfinder: Aigner, Georg, 94419 Reisbach (DE)
(74) Vertreter: Gustorf, Gerhard

(56) Entgegenhaltungen:
- DE-A1- 4 310 631
- DE-U1- 9 403 905
- DE-U1-0202004 001 29
- US-A- 4 787 614

## Beschreibung

Die Erfindung betrifft eine Stützvorrichtung mit Mitteln zur Befestigung an einem Gehäuse eines Vorschubapparates für den automatischen Vorschub von Holz-Werkstücken am Anschlag von Fräsmaschinen, wobei in dem Gehäuse angetriebene Vorschubrollen gelagert sind, wie aus DE-A 43 10 631 bekannt.

Mechanische Vorschubapparate werden beispielsweise bei Holzfräsmaschinen eingesetzt, um die zu bearbeitenden Werkstücke am Anschlag entlang vorzuschieben, wobei der über den Anschlag vorstehende Teil des rotierenden Fräswerkzeugs die gewünschte Profilbearbeitung ausführt. Das Gehäuse des Vorschubapparates ist hierbei über eine Reihe gelenkig und feststellbar miteinander verbundener Tragorgane an einer Säule einstellbar befestigt, welche auf dem Maschinentisch angebracht ist. Mit der Zahl der in dem Tragsystem vorgesehen Gelenke steigt die Gefahr, daß der Vorschubapparat während des Betriebs seine eingestellte Lage verändert und sich insbesondere winklig zum Anschlag einstellt oder seinen Abstand zum Anschlag hin verkleinert. Das hat nicht selten zur Folge, daß der Vorschubapparat in das rotierende Fräswerkzeug hineinschwenkt, wodurch die Vorschubrollen zerstört werden können, oder daß der Grundkörper der Rollen die Fläche des Anschlags beschädigt.

In DE-A 43 10 631 ist eine Vorschubeinrichtung zum Profilieren von Fenstersprossen aus Holz beschrieben und dargestellt, die ein Gehäuse mit einer Vielzahl von Transportrollen aufweist. Das Gehäuse ist zusammen mit einem Gegenanschlag auf zwei Spannschienen befestigt, die ihrerseits an einer Grundplatte festgelegt sind. Die Spannschienen können über Schnellspanner auf der Grundplatte verstellt werden, um den Gegenanschlag zusammen mit dem Gehäuse der Vorschubeinrichtung zu verstellen. Eine Verstellung des Gehäuses des Vorschubapparates relativ zum Gegenanschlag ist nicht vorgesehen.

Gegenstand der US-A 4 787 614 ist ein Werkstückhalter, bei dem das zu bearbeitende Werkstück mittels einer Klemmvorrichtung von unten gegen zwei Schienen gedrückt wird, welche insgesamt über Handgriffe manuell am Anschlag entlang geführt werden.

Der Erfindung liegt die Aufgabe zugrunde, eine Stützvorrichtung zur Verfügung zu stellen, bei der selbst bei unzureichender Fixierung des Vorschubapparates der einmal eingestellte Abstand zum Anschlag hin beibehalten bleibt.

Bei einer Stützvorrichtung der eingangs umrissenen Bauart wird diese Aufgabe erfindungsgemäß durch die kennzeichnenden Merkmale des Patentanspruchs 1 gelöst.

Die erfindungsgemäß vorgesehene Abstützstange wird bevorzugt in zweckmäßiger Weise an den beiden Wänden des Gehäuses angebracht, die dieses in Vorschubrichtung nach vorn und hinten abdecken. Dabei kann das Gehäuse des Vorschubapparates bereits vom Hersteller mit den Abstützstangen ausgerüstet werden; die Erfindung bietet aber auch die Möglichkeit, bereits im Einsatz befindliche Vorschubapparate nachträglich mit den Abstützstangen auszurüsten, was insbesondere dann leicht möglich ist, wenn jede Abstützstange in einem Tragblock verschiebbar und feststellbar gelagert ist, der an der Wand des Gehäuses befestigt werden kann.

Um den eingestellten Abstand zwischen dem Vorschubapparat und dem Anschlag zu fixieren, weist der Tragblock eine Klemmschraube auf, welche zum Feststellen der Abstützstange dient.

Nach einem weiteren, bevorzugten Merkmal der Erfindung hat jede Abstützstange an ihren beiden Enden einen Stützkopf mit einer konvex gewölbten Oberfläche. Auf diese Weise wird gewährleistet, daß auch bei schräg zum Anschlag eingestelltem Vorschubapparat eine Punktberührung zwischen dem jeweiligen Ende der Abstützstange und dem Anschlag realisiert wird.

Es ist besonders vorteilhaft, wenn in die zur Wand des Gehäuses weisende Fläche jedes Tragblocks zu dieser Wand hin verstellbare Stützelemente eingesetzt sind, die in vorteilhafter Weiterbildung der Erfindung in einer oberen und in einer unteren Reihe angeordnet sind. Damit besteht die Möglichkeit, den Tragblock auch an Gehäusewänden in stabiler Lage kippsicher zu befestigen, die nicht eben, sondern gewölbt sind. Durch Herausschrauben einzelner oder aller Stützelemente, die bevorzugt aus Innensechskantschrauben bestehen, kann eine Anpassung an die Wölbung der Wand erzielt werden.

In Weiterbildung der Erfindung sind zwischen den Stützelementen an der Wand des Gehäuses zu befestigende Kopfschrauben vorgesehen, deren Gewindedurchmesser mit dem Gewindedurchmesser der Innensechskantschrauben übereinstimmt. Das eröffnet die Möglichkeit, die Kopfschrauben und die Stützelemente gegeneinander auszutauschen, wodurch eine optimale Fixierung des Tragblocks an der Gehäusewand ermöglicht wird.

Dadurch, daß der Tragblock mit seiner Stützstange symmetrisch ausgebildet ist, kann dieser sowohl an der vorderen als auch an der hinteren Wand des Gehäuses des Vorschubapparates befestigt werden, ohne daß die Notwendigkeit besteht, zwei unterschiedliche Tragblöcke bereitzustellen.

Die Erfindung ist nachstehend an einem Ausführungsbeispiel erläutert, das in der Zeichnung dargestellt ist. Es zeigen:
Figur 1 eine schematische Ansicht eines an einer Holzfräsmaschine angebrachten Vorschubapparates mit angebautem Tragblock gemäß der Erfindung,
Figur 2 eine schematische Draufsicht auf den Vorschubapparat mit zwei daran befestigten Tragblöcken,
Figur 3 eine Seitenansicht eines Tragblocks im abgenommenen Zustand und
Figur 4 eine Draufsicht auf den Tragblock der Figur 3.

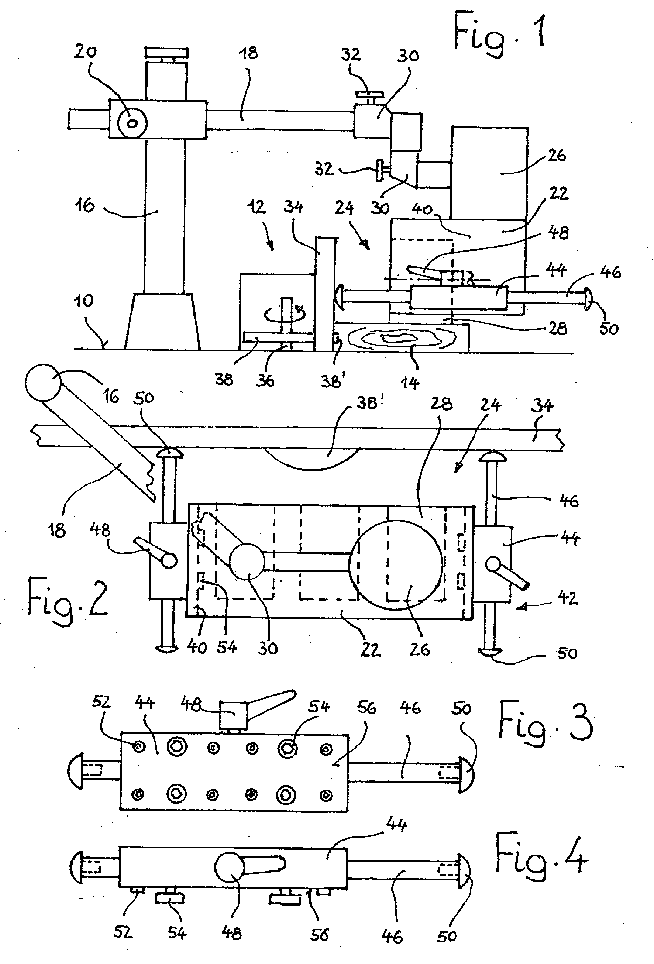

Wie die Figuren 1 und 2 schematisch zeigen, ist auf dem Werktisch 10 einer Fräsmaschine 12 zur Bearbeitung eines Holz-Werkstückes 14 eine vertikale Säule 16 befestigt, die über einen horizontalen Tragarm 18, welcher mittels einer Stellschraube 20 vertikal und horizontal eingestellt werden kann, das Gehäuse 22 eines mechanischen Vorschubapparates 24 trägt. Zwischen dem Tragarm 18 und dem Gehäuse 22, auf dessen Oberseite ein Motor 26 für den Drehantrieb einer Reihe von Vorschubrollen 28 angebracht ist, sind mehrere Gelenke 30 vorgesehen, die mittels Feststellschrauben 32 in ihrer jeweils eingestellten Winkellage fixiert werden können. Auf diese Weise ist es möglich, für den Vorschubapparat 24 die gewünschte Lage zu wählen und einzustellen.

Bei der Bearbeitung des Werkstücks 14 wird dieses über die angetriebenen Vorschubrollen 28 am Anschlag 34 der Fräsmaschine 12 entlang vorgeschoben, wobei der schematisch angedeutete, auf einer Welle 36 befestigte Fräser 38 mit seinem über den Anschlag 34 vorstehenden Teil 38' die gewünschte Fräsbearbeitung des Werkstücks 14 ausführt.

Wie Figur 2 zeigt, ist sowohl an der in Vorschubrichtung vorderen Wand 40 des Gehäuses als auch an der hinteren Wand 40 je eine gemäß der Erfindung ausgebildete Stützvorrichtung 42 befestigt, die dafür sorgt, daß der einmal gewählte Abstand zwischen dem Vorschubapparat 24 und dem Anschlag 34 beibehalten bleibt und sich nicht verändern kann. Dieser Abstand ist in den Figuren 1 und 2 zur besseren Veranschaulichung übertrieben dargestellt. Jede Stützvorrichtung 42 besteht aus einem Tragblock 44, der im Ausführungsbeispiel ein quaderförmiges Metall- oder Kunststoffteil ist. In einer durchgehenden Längsbohrung des Tragblocks 44 ist eine Abstützstange 46 in ihrer Achsrichtung verschiebbar gelagert. Zur Feststellung der eingestellten Lage der Abstützstange 46 dient eine Klemmschraube 48, deren nicht weiter dargestellter Gewindeschaft in eine Gewindebohrung des Tragblocks 44 eingeschraubt ist und die zylindrische oder prismatische Abstützstange 46 in der Längsbohrung festklemmt.

Die Abstützstange 46 hat an ihren beiden Enden einen Stützkopf 50 mit gewölbter Oberfläche. Wie die Figuren 3 und 4 zeigen, ist dieser vorzugsweise aus Kunststoff hergestellte Stützkopf 50 in eine Bohrung der Abstützstange 46 eingepaßt oder eingeschraubt. Aus den Figuren 1 und 2 ist deutlich, daß die beiden fräserseitigen Stützköpfe 50 der Abstützstangen 46 am Anschlag 34 anliegen, wodurch der gewünschte Abstand zwischen Anschlag 34 und Vorschubapparat 24 beibehalten wird.

Figur 3 zeigt, daß in die zur Wand 40 des Gehäuses 22 weisende Fläche 56 des Tragblocks 44 Stützelemente 52 in Form von Innensechskantschrauben eingeschraubt sind. Die Stützelemente 52 sind dabei in einer oberen und in einer unteren Reihe angeordnet und können nach Bedarf herausgeschraubt werden, was in Figur 4 angedeutet ist. Damit besteht die Möglichkeit, eine Anpassung an gewölbte Wände 40 herbeizuführen, so daß auch in diesem Fall eine stabile, kippfreie Fixierung des Tragblocks 44 an der Wand 40 des Gehäuses 22 gewährleistet ist.

Figur 3 zeigt schließlich, daß zwischen den Stützelementen 52 insgesamt vier Kopfschrauben 54 vorgesehen sind, die zur Befestigung des Tragblocks 44 an der Wand 40 des Gehäuses 22 dienen, was in Figur 2 angedeutet ist. Da gemäß der Erfindung der Gewindedurchmesser der Kopfschrauben 54 mit dem Gewindedurchmesser der als Innensechskantschrauben ausgebildeten Stützelemente 52 übereinstimmt, können diese nach Bedarf gegeneinander ausgetauscht werden, um die Kopfschrauben 54 bei Bedarf weiter innen oder weiter außen anzubringen.

## Patentansprüche

1. Stützvorrichtung mit Mitteln (54) zur Befestigung an einem Gehäuse (22) eines Vorschubapparates (24) für den auto-matischen Vorschub von Holz-Werkstücken am Anschlag (34) von Fräsmaschinen, wobei in dem Gehäuse (22) angetriebene Vorschubrollen (28) gelagert sind, **dadurch gekennzeichnet, daß** an wenigstens einer Wand (40) des Gehäuses (22) eine zum Anschlag (34) hin verstellbare Abstützstange (46) angebracht ist, die in einem Tragblock (44) verschiebbar und feststellbar gelagert ist, wobei der Tragblock (44) eine Klemmschraube (48) zum Feststellen der Abstützstange (46) aufweist.

2. Stützvorrichtung nach Anspruch 1, **dadurch gekennzeichnet, daß** die Abstützstange (46) an ihren beiden Enden einen Stützkopf (50) mit konvex gewölbter Oberfläche aufweist.

3. Stützvorrichtung nach Anspruch 1 oder 2, **dadurch gekennzeichnet, daß** in die zur Wand (40) des Gehäuses (22) weisende Fläche (56) des Tragblocks (44) zur Wand (40) hin verstellbare Stützelemente (52) eingesetzt sind.

4. Stützvorrichtung nach Anspruch 3, **dadurch gekennzeichnet, daß** die Stützelemente (52) in einer oberen und einer unteren Reihe angeordnet sind.

5. Stützvorrichtung nach Anspruch 3 oder 4, **dadurch gekennzeichnet, daß** die Stützelemente (52) aus Innensechskantschrauben bestehen.

6. Stützvorrichtung nach Anspruch 5, **dadurch gekennzeichnet, daß** zwischen den Stützelementen (52) an der Wand (40) des Gehäuses (22) zu befestigende Kopfschrauben (54) vorgesehen sind, deren Gewindedurchmesser mit dem Gewindedurchmesser der Innensechskantschrauben (52) übereinstimmt.

## Claims

1. Support device provided with means (54) for fastening it on the housing (22) of a feed unit (24) for automatically advancing wood workpieces along the fence (34) of milling machines, wherein driving rollers (28) are mounted in said housing (22), **characterized in that** at least one wall (40) of the housing (22) carries a supporting rod (46) which can be adjusted relative to said fence (34) and which is mounted in a supporting block (44) such that it may be shifted and locked in said supporting block (44) which is provided with a clamping screw (48) for locking said supporting rod (46).

2. Support device according to claim 1, wherein both ends of the supporting rod (46) are provided with an abutting head (50) having a convex shaped outer surface.

3. Support device according to claim 1 or 2, wherein supporting elements (52) are adjustably mounted in the surface (56) of the supporting block (44) facing the wall (40) of the housing (22), such that they may be adjusted against said wall (40).

4. Support device according to claim 3, wherein said supporting elements (52) are positioned in an upper and in a lower row.

5. Support device according to claim 3 or 4, wherein the supporting elements (52) are hexagon sockets.

6. Support device according to claim 5, wherein between said supporting elements (52) head cap screws (54) are provided to be fastened in the wall (40) of the housing (22), said screws (54) having a thread diameter equal to that of the hexagon sockets (52).

## Revendications

1. Dispositif de support avec moyens (54) de fixation sur un boîtier (22) d'un dispositif d'avance (24) pour l'avance automatique de pièces à usiner en bois contre la butée (34) de fraiseuses, dans lequel des rouleaux d'alimentation (28) motorisés sont logés dans le boîtier (22), **caractérisé en ce qu'**une tige d'appui ajustable (46) en direction de la butée (34) est montée sur au moins une paroi (40) du boîtier (22), laquelle est logée de manière à pouvoir être déplacée et fixée dans un bloc porteur (44), le bloc porteur (44) présentant une vis de serrage (48) destinée à fixer la tige d'appui (46).

2. Dispositif de support selon la revendication 1, **caractérisé en ce que** la tige d'appui (46) présente au niveau de ses deux extrémités une tête de support (50) à surface convexe.

3. Dispositif de support selon les revendications 1 ou 2, **caractérisé en ce que** des éléments de support ajustables (52) en direction de la paroi (40) sont insérés dans la surface (56) du bloc porteur (44) orientée vers la paroi (40) du boîtier (22).

4. Dispositif de support selon la revendication 3, **caractérisé en ce que** les éléments de support (52) sont disposés dans une rangée supérieure et une rangée inférieure.

5. Dispositif de support selon les revendications 3 ou 4, **caractérisé en ce que** les éléments de support (52) se composent de vis à six pans creux.

6. Dispositif de support selon la revendication 5, **caractérisé en ce qu'**entre les éléments de support (52) sur la paroi (40) du boîtier (22) sont prévues des vis à tête (54) devant être fixées, dont le diamètre du filetage correspond au diamètre de filetage des vis à six pans creux (52).
